# EUROPEAN PATENT APPLICATION

(11) **EP 4 668 908 A1**
(43) Date of publication of application: **24.12.2025**
(21) Application number: 23922725.9
(22) Date of filing: 16.02.2023
(51) Int. Cl.: H04W 56/00, H04W 74/08

(54) **TERMINAL, WIRELESS COMMUNICATION METHOD, AND BASE STATION**

(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); HARADA, Hiroki, Tokyo 100-6150 (JP); WANG, Jing, Beijing 100190 (CN)
(74) Representative: Hoffmann Eitle
(86) International application number: PCT/JP2023/005538
(87) International publication number: WO 2024/171389

(57) **Abstract**

A terminal according to one aspect of the present disclosure includes a receiving section that receives an indication of one or a plurality of candidate cell indices or timing advance group (TAG) IDs for physical random access channel (PRACH) transmission on a physical link downlink control channel (PDCCH), and a control section that controls the PRACH transmission to candidate cell(s) corresponding to the candidate cell index(ices) or the TAG ID(s), based on the indication. According to one aspect of the present disclosure, UL transmission can be appropriately controlled even when the UL transmission can be performed for a plurality of candidate cells.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed that, in future radio communication systems (for example, radio communication systems of later than Rel. 16/5G), communication is controlled based on inter-cell mobility with a plurality of cells including a non-serving cell (for example, a candidate cell) or inter-cell mobility using a plurality of transmission/reception points (for example, a multi-TRP (MTRP)).

However, when UL transmission can be performed for a plurality of candidate cells, how to perform control on the UL transmission (for example, control on timing advance and the like) presents a problem. Unless UL transmission for a plurality of candidate cells is appropriately controlled, quality of communication using a plurality of transmission/reception points may degrade.

The present disclosure has been made in view of this respect, and has an object to provide a terminal, a radio communication method, and a base station that enable appropriate control on UL transmission even when the UL transmission can be performed for a plurality of candidate cells.

### Solution to Problem

A terminal according to one aspect of the present disclosure includes a receiving section that receives an indication of one or a plurality of candidate cell indices or timing advance group (TAG) IDs for physical random access channel (PRACH) transmission on a physical link downlink control channel (PDCCH), and a control section that controls the PRACH transmission to candidate cell(s) corresponding to the candidate cell index(ices) or the TAG ID(s), based on the indication.

### Advantageous Effects of Invention

According to one aspect of the present disclosure, UL transmission can be appropriately controlled even when the UL transmission can be performed for a plurality of candidate cells.

### Brief Description of Drawings

[FIG. 1] FIG. 1A is a diagram to show an example of movement of a UE in Rel. 17. FIG. 1B is a diagram to show an example of movement of the UE in Rel. 18.
[FIG. 2] FIG. 2 is a diagram to show an example of an association between serving cells and candidate cells.
[FIG. 3] FIG. 3A is a diagram to show a second example of option 2 for a candidate cell configuration. FIG. 3B is a diagram to show a third example of option 2 for a candidate cell configuration.
[FIG. 4] FIG. 4 is a diagram to show serving cell switch example 1.
[FIG. 5] FIG. 5 is a diagram to show serving cell switch example 2.
[FIG. 6] FIG. 6 is a diagram to show serving cell switch example 3.
[FIG. 7] FIG. 7 is a diagram to show an example of timing advance groups (TAGs) to which cells included in a cell group belong.
[FIG. 8] FIG. 8 is a diagram to show an example of a MAC CE for timing advance command.
[FIG. 9] FIG. 9 is a diagram to show an example of a configuration of TAGs when association of TAG IDs with candidate cells is supported.
[FIG. 10] FIG. 10 is a diagram to show an overview of L1L2-triggered mobility (LTM).
[FIG. 11] FIG. 11 is a diagram to show a PDCCH indicated RACH (PDCCH ordered RACH) including random access response (RAR) monitoring for the serving cell.
[FIG. 12] FIG. 12 is a diagram to show a PDCCH indicated RACH (PDCCH ordered RACH) not including random access response (RAR) monitoring for candidate cells.
[FIG. 13] FIG. 13 is a diagram to show DCI format 1_0 CRC-scrambled with a C-RNTI.
[FIG. 14] FIG. 14A and FIG. 14B are diagrams to show examples of a DCI field used for notification of identification information of a cell.
[FIG. 15] FIG. 15 is a diagram to show an example of a cell configuration according to a first embodiment.
[FIG. 16] FIG. 16 is a diagram to show a relationship between the number of candidate cells/TAGs configured by RRC and the number of DCI bits.
[FIG. 17] FIG. 17A to FIG. 17C are diagrams to show examples of assignment of candidate cell indices to the DCI field.
[FIG. 18] FIG. 18A and FIG. 18B are diagrams to show examples in which the candidate cell indices are assigned to the DCI field in ascending order/descending order of the indices.
[FIG. 19] FIG. 19 is a diagram to show an example of the DCI field when parameters corresponding to the candidate cell indices or the TAG IDs are configured/indicated by higher layer signaling.
[FIG. 20] FIG. 20 is a diagram to show an example in which a plurality of candidate cell indices are indicated by DCI.
[FIG. 21] FIG. 21 is a diagram to show an example of option 3-1.
[FIG. 22] FIG. 22 is a diagram to show an example of option 3-2.
[FIG. 23] FIG. 23 is a diagram to show an example of processing of aspect 1-3.
[FIG. 24] FIG. 24 is a diagram to show a relationship between the number of PRACH transmissions configured by RRC and the number of DCI bits.
[FIG. 25] FIG. 25A to FIG. 25C are diagrams to show examples of assignment of the number of PRACH transmissions to the DCI field.
[FIG. 26] FIG. 26A to FIG. 26C are diagrams to show examples in which the number of PRACH transmissions is assigned to the DCI field in ascending order/descending order.
[FIG. 27] FIG. 27 is a diagram to show an example of the DCI field when the number of PRACH transmissions is configured/indicated by higher layer signaling.
[FIG. 28] FIG. 28 is a diagram to show a procedure of a RACH-less method.
[FIG. 29] FIG. 29 is a diagram to show an overview of the RACH-less method.
[FIG. 30] FIG. 30 is a diagram to show an example of a schematic structure of a radio communication system according to one embodiment.
[FIG. 31] FIG. 31 is a diagram to show an example of a structure of a base station according to one embodiment.
[FIG. 32] FIG. 32 is a diagram to show an example of a structure of a user terminal according to one embodiment.
[FIG. 33] FIG. 33 is a diagram to show an example of a hardware structure of the base station and the user terminal according to one embodiment.
[FIG. 34] FIG. 34 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (L1/L2 Inter-Cell Mobility)

As described above, it is studied that the UE performs UL transmission to one or a plurality of cells/TRPs. As a procedure of this case, the following scenario 1 or scenario 2 is considered. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, and an additional cell may be interchangeably interpreted.

### <Scenario 1>

Scenario 1 corresponds to inter-cell mobility of the multi-TRP, for example; however, it may be a scenario not corresponding to inter-cell mobility of the multi-TRP.

(1) The UE receives, from the serving cell, a configuration of an SSB for beam measurement of a TRP corresponding to a different PCI from the serving cell and a configuration necessary for using radio resources for data transmission and reception, including resources of the different PCI.
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured with a higher layer parameter related to the PCI of the non-serving cell from the serving cell. Scenario 1 may be applied in Rel. 17, for example.

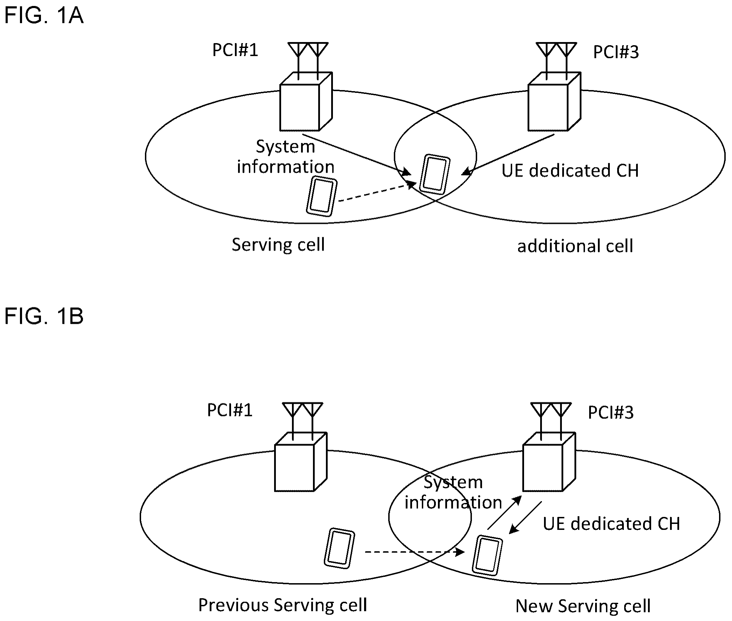

FIG. 1A is a diagram to show an example of movement of the UE in Rel. 17. It is assumed that the UE moves from a cell (serving cell) of PCI #1 to a cell (additional cell) (overlapping the serving cell) of PCI #3. In this case, in Rel. 17, the serving cell is not switched by L1/L2. The additional cell is a cell having an additional PCI different from the PCI of the serving cell. The UE can receive/transmit a UE-dedicated channel from the additional cell. The UE needs to be present within coverage of the serving cell in order to receive a UE common channel (for example, system information/paging/short message).

### <Scenario 2>

In scenario 2, L1/L2 inter-cell mobility is applied. In L1/L2 inter-cell mobility, the serving cell can be changed by using a function such as beam control without performing RRC reconfiguration. In other words, transmission and reception to and from an additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. Scenario 2 may be applied to Rel. 18, for example. In scenario 2, for example, the following procedure is performed.

(1) The UE receives, from the serving cell, a configuration of an SSB for a cell (additional cell) having a different PCI for beam measurement/serving cell change.
(2) The UE performs beam measurement of the cell using the different PCI, and reports measurement results to the serving cell.
(3) The UE may receive a configuration (serving cell configuration) of the cell having the different PCI by higher layer signaling (for example, RRC). In other words, a pre-configuration related to serving cell change may be performed. The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 1B is a diagram to show an example of movement of the UE in Rel. 18. In Rel. 18, the serving cell is switched by L1/L2. The UE can receive/transmit a UE-dedicated channel/common channel from/to a new serving cell. The UE may go out of the coverage of the previous serving cell.

### (Configuration of Plurality of Candidate Cells)

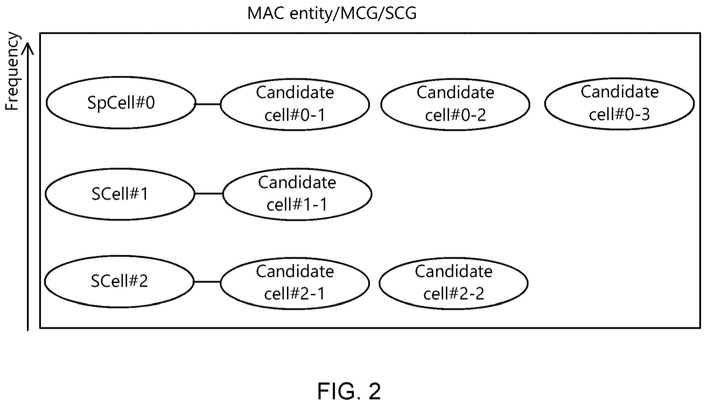

FIG. 2 is a diagram to show an example of an association between serving cells and candidate cells. SpCell #0, SCell #1, or SCell #2 is a serving cell. Note that the SpCell means a special cell (including a primary cell (PCell) and a primary secondary cell (PSCell)). The SCell means a secondary cell. SpCell #0 is associated with candidate cell #0-1, candidate cell #0-2, and candidate cell #0-3. SCell #1 is associated with candidate cell #1-1. SCell #2 is associated with candidate cells #2-1 and 2-2. In this manner, one or more candidate cells (candidate serving cells) may be associated with the serving cell.

Regarding a configuration of a cell to become a candidate (candidate cell) when the serving cell is changed, for example, the following options 1 and 2 are considered.

### <Option 1>

As in inter-cell mobility of Rel. 17, information in ServingCellConfig may include information related to a plurality of candidate cells. In this case, the plurality of candidate cells need to share the same configuration such as the PDCCH/PDSCH/UL as the serving cell.

For example, in inter-cell mobility of Rel. 17, "mimoParam-r17" is added and PCI configuration information is added under ServingCellConfig. mimoParam-r17 may include additionalPCI-ToAddModList-r17 being an information list of additional SSBs having PCIs different from the PCI of the serving cell. The same configuration, except for a part of information, as that of the serving cell may be applied to the candidate cells (additional cells, cells having additionalPCI).

### <Option 2>

A complete configuration (for example, ServingCellConfig) corresponding to each cell may be applied to a plurality of candidate cells, and the plurality of candidate cells may be associated with each serving cell by reusing a carrier aggregation (CA) configuration framework. In other words, the candidate cells may not share configuration information with the serving cells, and another configuration may be applied thereto. The UE is provided with a complete configuration of each candidate cell, and can thus perform appropriate communication with the candidate cells.

In the CA configuration framework, an SpCell can be configured for each cell group, and a plurality of SCells can be added. By reusing the CA framework, the serving cell may be configured for each cell group for L1/L2 inter-cell mobility, and a plurality of candidate cells may be configured. The candidate cells may be activated/deactivated by a MAC CE. The candidate cells may be activated/deactivated by TCI information corresponding to the candidate cells being activated/deactivated by a MAC CE. The method is considered to be beneficial for reducing complexity of UE operation.

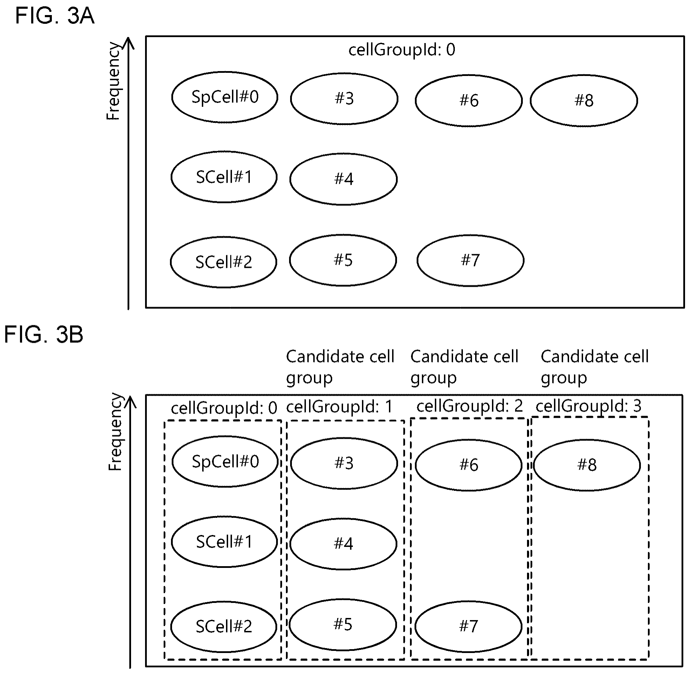

FIG. 3A is a diagram to show a first example of option 2 for a candidate cell configuration. In the example of FIG. 3A, a common candidate cell pool for cell switch in the MCG/SCG is applied to the candidate cells. In other words, the candidate cells are regarded as one pool (group), regardless of a frequency band.

FIG. 3B is a diagram to show a second example of option 2 for a candidate cell configuration. In the example of FIG. 3B, a plurality of cell groups are configured, and cell group switch can be performed by using L1/L2 signaling. The candidate cells are configured for each cell group, and a configuration of each group includes corresponding SpCell and SCell indices.

### (Signaling for Serving Cell Change Indication)

Implicit or explicit signaling for a serving cell change indication will be described.

### {Aspect 1}

In aspect 1, implicit signaling for a serving cell change indication will be described.

### {{Option 1-1}}

When a specific control resource set (CORESET) (for example, at least one of CORESET #0, a CORESET of CH5 Type0-CSS, and a CORESET of CH6/CH7/CH8 CSS) is indicated (activated) by a MAC CE together with one or more TCI states associated with a cell having a PCI different from the PCI of the serving cell (when one or more TCI states associated with a cell having a PCI different from the PCI of the serving cell are indicated/activated for a specific CORESET by a MAC CE), the UE may determine to change the serving cell to another cell (cell x, the cell having the different PCI). In other words, the activation may implicitly indicate change of the serving cell to another cell.

In this case, the UE may update a beam of another CORESET ID, another CORESET using CH6/CH7/CH8, or another CORESET using a CSS to the same TCI state(s) as the activated TCI state(s).

### {{Option 1-2}}

When a MAC CE activates/deactivates TCI states of the PDSCH, and all of the TCI states activated by the MAC CE are associated with the same cell x having a PCI different from the PCI of the serving cell, the UE may determine to change the serving cell to another cell (cell x). In other words, the association may implicitly indicate change of the serving cell to another cell.

In a case in which the option is applied, when a NW (base station) does not change the serving cell, and the MAC CE activates the TCI states of the PDSCH associated with the cell having the different PCI, TCI states related to another cell (for example, the current serving cell or a cell having a second different PCI) need to be included as well.

### {{Option 1-3}}

When a MAC CE activates/deactivates unified TCI states (for example, corresponding to a unified TCI framework of Rel. 17), and all of the activated unified TCI states are associated with the same cell x having a different PCI, the UE may determine to change the serving cell to another cell (cell x). In other words, the association may implicitly indicate change of the serving cell to another cell.

### {Aspect 2}

In aspect 2, explicit signaling for a serving cell change indication will be described. In aspect 2, for example, scenario 2 described above is applied.

### {{Option 2-1}}

An example of the serving cell change indication will be described below. Note that activation/deactivation of the non-serving cell, change of the serving cell, and transmission/reception of another cell (non-serving cell) having a physical cell ID different from the physical cell ID of the serving cell may be interchangeably interpreted.

The UE may receive a new MAC CE including at least one of fields (pieces of information) shown in (1) to (3) below corresponding to the non-serving cell, which is used for activation/deactivation of the non-serving cell. When the UE receives the MAC CE, the UE may determine to change the serving cell to another cell (non-serving cell). The UE may control transmission and reception of a DL signal/UL signal to and from the non-serving cell, based on the piece(s) of information. Note that there may be one or a plurality of non-serving cells. In the example shown below, a MAC CE including a plurality of fields indicating a plurality of non-serving cell indices is applied.

(1) Serving cell ID.
(2) BWP ID.
(3) Non-serving cell ID used for activation. The non-serving cell ID may be replaced with any piece of information corresponding to the non-serving cell (with which the non-serving cell can be identified).

As an example of (3), for example, one of (3-1) to (3-5) may be applied.
(3-1) PCI (PCI to be used directly). For example, 10 bits are used.
(3-2) Recreated index (new ID) of the non-serving cell. The new ID may be associated with a part of PCIs, and may be configured only for the serving cell and the non-serving cell used by (available to) the UE. The new ID can have a reduced number of bits in comparison to the PCI.
(3-3) CSI report configuration ID (CSI-ReportConfigId) (when CSI-ReportConfig corresponds to one or a plurality of non-serving cells).
(3-4) CSI resource configuration ID (CSI-ResourceConfigId) (when CSI-ResourceConfigId corresponds to one or a plurality of non-serving cells).
(3-5) Bitmap indicating activation/deactivation of each non-serving cell. The size (the number of bits) of the bitmap may be the same as the number of non-serving cells configured in the CC. For example, when a second non-serving cell out of three non-serving cells is activated, "010" is configured.

At least one of the pieces of information included in the MAC CE may be included in DCI. Alternatively, at least one of the serving cells activated by the MAC CE may be indicated by DCI. The MAC CE/DCI may include a field for indicating a TCI state/SSB/CSI-RS from a cell having a different PCI so that the UE can recognize a monitored DL beam in a target cell (changed serving cell). The UE may create and transmit a beam report (CSI report) by using the TCI state/SSB/CSI-RS.

### {{Option 2-2}}

The UE may receive a MAC CE, in which a new 1-bit field "C" is added to an existing MAC CE. The field indicates whether to perform serving cell change. The UE may receive the MAC CE and determine whether to change the serving cell to another cell, based on the field.

### {{Option 2-3}}

Regarding the MAC CE in option 2-2, a field indicating a serving cell index/PCI/another ID (the new ID of option 2-1 described above or the like) and a field of a TCI state/SSB/CSI-RS of a target cell (changed serving cell) may further be included in the MAC CE.

In this manner, the indication for the serving cell change indication is indicated by a MAC CE/DCI, and therefore the UE can appropriately perform serving cell change.

### {Serving Cell Switch Example 1}

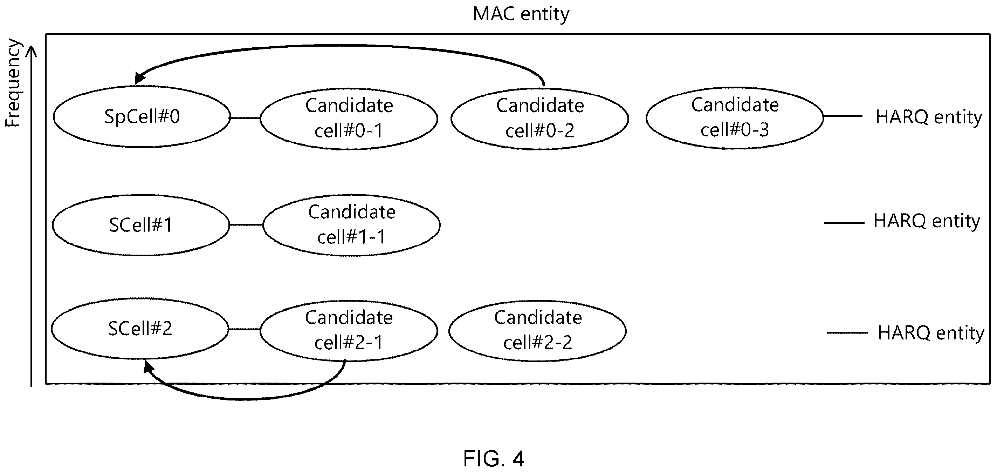

FIG. 4 is a diagram to show serving cell switch example 1. For example, when change of the serving cell to candidate cell #0-2 is indicated by L1/L2 signaling in serving cell SpCell #0 of the MCG/SCG, candidate cell #0-2 becomes new serving cell SpCell #0. For example, when change of the serving cell to candidate cell #2-1 is indicated by L1/L2 signaling in serving cell SCell #2 of the MCG/SCG, candidate cell #2-1 becomes new serving cell SCell #2.

### {Serving Cell Switch Example 2}

RRC/MAC CE can configure global candidate cell IDs (cells #0, ..., 5) for each cell group, band, FR, and UE. The UE may be indicated with serving cell switch by the global candidate cell IDs.

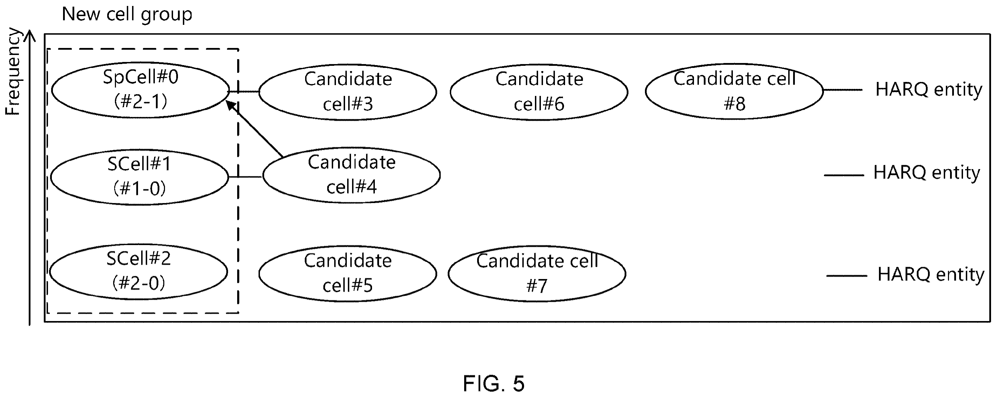

FIG. 5 is a diagram to show serving cell switch example 2. Similarly to FIG. 3A, a pool of a plurality of candidate cells may be configured, and the serving cell can be switched to any (activated) candidate cell in the pool by L1/L2 signaling. In this case, the configured candidate cells may become either the SpCells or the SCells, based on L1/L2 signaling.

The UE may receive an indication of serving cell change (from cell #2-1 to candidate cell 4) by a MAC CE/DCI. The indicated candidate cell #4 becomes the new SpCell of the cell group.

### {Serving Cell Switch Example 3}

RRC/MAC CE can configure global candidate cell IDs (cells #0-1, #0-1, ..., 2-2) for each cell group, band, FR, and UE. The UE may be indicated with serving cell switch by the global candidate cell IDs.

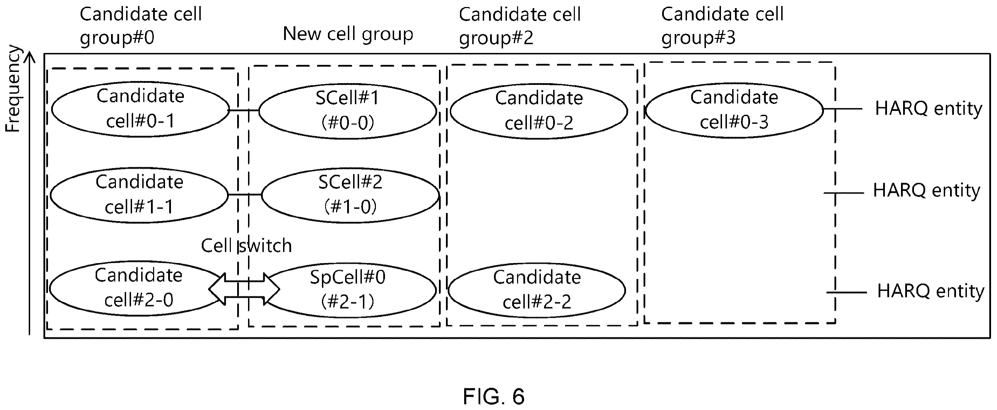

FIG. 6 is a diagram to show serving cell switch example 3. The UE receives an indication of serving cell change (from cell #2-0 to cell #2-1) by a MAC CE/DCI. The indicated cell #2-1 becomes the new SpCell of the cell group. Cells (cell #0-0 and cell #1-0) of the same cell group as the indicated cell #2-1 become Scell #1 and Scell #2. In other words, the serving cell group is switched.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (MCG/SCG).

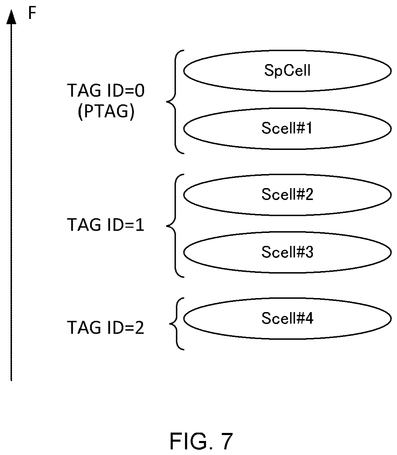

In existing systems (for example, Rel-16 NR), configuration of four TAGs at maximum (for example, MCG/SCG) is supported for each cell group (see FIG. 7). FIG. 7 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command is signaled from a radio base station to the UE on a MAC layer. The UE controls a certain timer (for example, a TA timer), based on reception of the TA command.

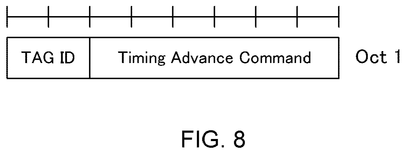

A MAC CE for timing advance command may have a structure including a field for timing advance group index (for example, TAG ID) and a field for timing advance command (see FIG. 8). The TAG ID field is used for indication of the TAG ID of an addressed TAG. The timing advance command field may indicate an index value T_{A} (0, 1, 2, ..., 63) to be used for control of the amount of timing adjustment to be applied by the MAC entity.

A parameter corresponding to each TAG ID may be configured by a higher layer parameter. For example, a parameter such as a time alignment timer (for example, timeAlignmentTimer) corresponding to each TAG ID may be configured. Alternatively, a TAG ID may be configured for each serving cell by a higher layer parameter (for example, tag-ID included in ServingCellConfig). Note that each TAG ID/parameter may be updated by a MAC CE after being configured by a higher layer parameter.

The time alignment timer may be maintained for UL time alignment. In Rel. 17, a time alignment timer may be configured/associated for each TAG. When the UE has received a MAC CE for timing advance command (for example, a TAC MAC CE), the UE starts or restarts a time alignment timer related to each indicated timing advance group (for example, TAG).

When a MAC entity receives the TAC MAC CE, and a certain value (N_{TA}) is maintained for the indicated TAG, the MAC entity uses the timing advance command for the indicated TAG or starts or restarts the time alignment timer related to the indicated TAG. The certain value (N_{TA}) may be timing advance between DL and UL.

Operation when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, in Rel. 17, certain operation for PTAG is employed when a timing advance timer corresponding to a PTAG expires, and certain operation for STAG may be employed when a timing advance timer for STAG expires.

For example, when such a time alignment timer expires, the following operation (for example, the certain operation for PTAG/certain operation for STAG) may be performed.

### {Certain Operation for PTAG}

In a case where the time alignment timer is associated with a PTAG,
- flush all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Certain Operation for STAG}

In a case where the time alignment timer is associated with an STAG, for all serving cells belonging to the TAG,
- flush all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

It is also assumed that, in future radio communication systems, UL transmission is controlled based on timing advance for a serving cell (or a TRP of the serving cell) and a non-serving cell/additional cell (or a TRP of the non-serving cell/additional cell) in inter-cell mobility. Alternatively, a case is assumed that, in future radio communication systems, a different TAG (or TAG-ID) is configured for each of one or more TRPs (for example, a plurality of TRPs having different PCIs) corresponding to a certain cell (or CC). Alternatively, a case is assumed that different TRPs corresponding to a certain cell share a common TAG.

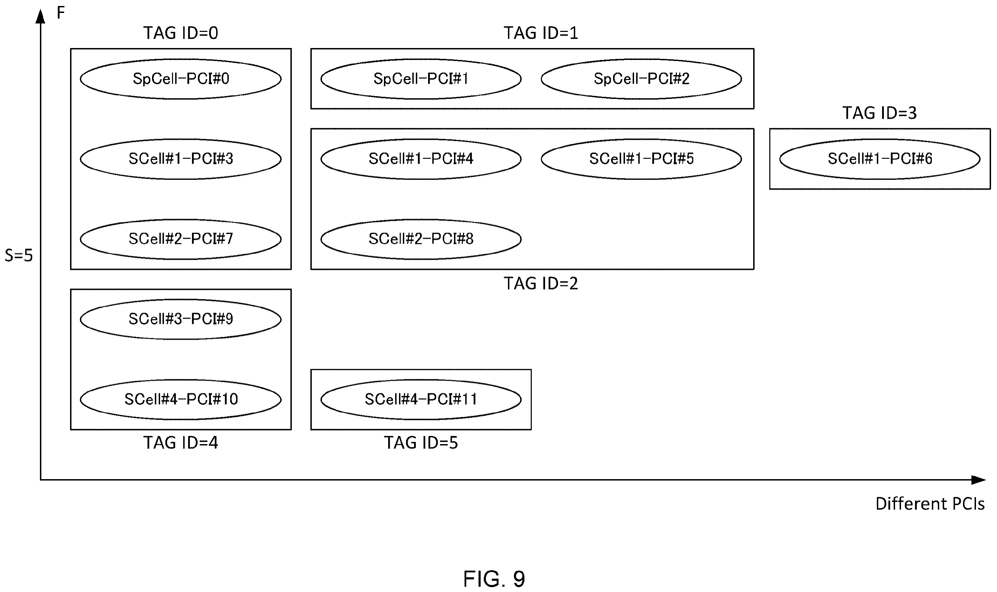

FIG. 9 is a diagram to show an example of a configuration of TAGs each being for a plurality of cells (or TRPs) having different PCIs.

It is also assumed that M PCIs (for example, a serving cell + candidate cells associated with the serving cell) is configurable at maximum per CC and that configuration of N TAG(s) (for example, N ≤ M) at maximum is supported for the maximum M PCIs. In this case, one or a plurality of PCIs may be associated with one TAG.

For up to S serving cell(s) (or for S serving cell(s) at maximum) in a cell group, one or a plurality of PCIs may be associated with one TAG. In this case, T TAG(s) at maximum may be configured in consideration of one PCI per CC (case 1). In other words, (T × N) TAG(s) at maximum may be configured for the max (M × S) cells. Alternatively, up to U TAG(s) at maximum may be configured for the max (M × S) cells (case 2).

### (Overview of L1L2-Triggered Mobility (LTM))

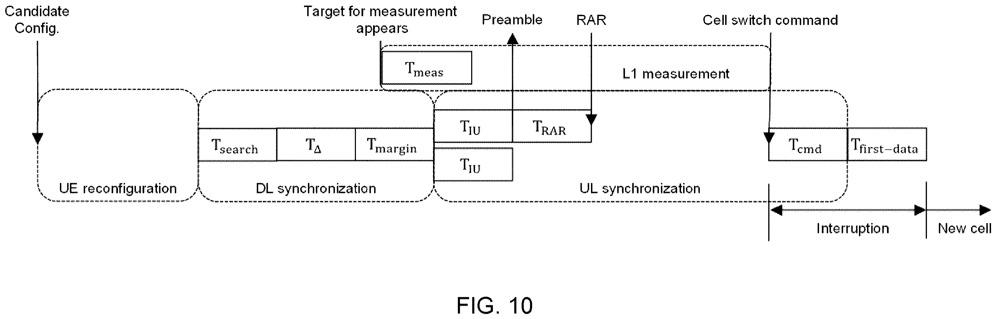

FIG. 10 is a diagram to show an overview of L1L2-triggered mobility (LTM). LTM and L1/L2 inter-cell mobility may be interchangeably interpreted. The UE receives configurations related to candidate cells (candidate configurations) from the NW at the time of UE reconfiguration. The UE reconfiguration includes T_{RRC} and T_{proccesing1/Tproccesing2}. T_{RRC} (for example, up to 10 ms) is processing time for RRC reconfiguration for carrying the configurations of the candidate cells (candidate configurations). T_{proccesing1/Tproccesing2} (for example, up to 20 ms for the same FR and up to 40 ms for different FRs) is time for UE processing for each of before and after a cell switch command. This may include L2/3 reconfiguration, RF retuning, baseband retuning, and if necessary, security update and the like.

DL synchronization includes T_{search}, T_{Δ}, and T_{margin}. T_{search} (for example, 0 ms when a cell is known and up to 60 ms when a cell is unknown) is time required for target cell search. T_{Δ} is time for fine tracking and acquisition of all timing information. T_{margin} (for example, up to 2 ms) is time for post-processing for the SSB and the CSI-RS.

L1 measurement (L1 mesurement) includes Tₘₑₐₛ (SMTC period (for example, 20 ms)). Tₘₑₐₛ is a measurement delay from appearance of a target to the cell switch command.

UL synchronization includes T_{IU}, T_{RAR}, and T_{cmd}. T_{IU} (for example, up to 15 ms) is uncertain interruption time at the time of obtaining a first available PRACH occasion in a new cell. T_{RAR} (for example, up to 4 ms) is time for RAR delay. T_{cmd} (for example, up to 5 ms) is processing time of an L1/L2 command (HARQ and paging).

T_{first-data} after T_{cmd} is time for the UE to perform first DL reception/UL transmission on an indication beam of the target cell after an RAR.

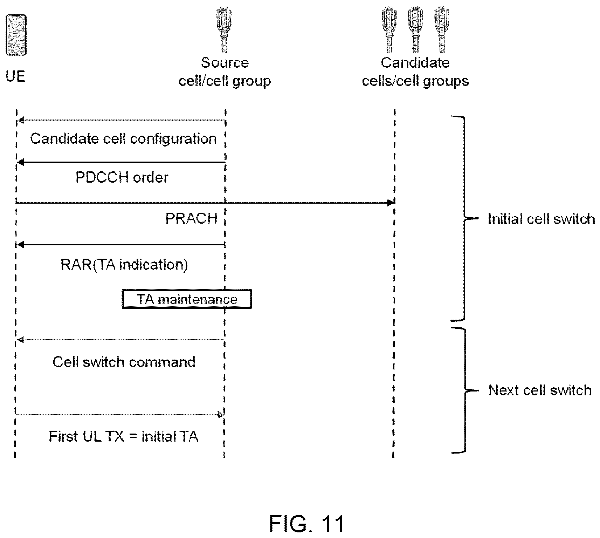

FIG. 11 is a diagram to show a PDCCH indicated RACH (PDCCH ordered RACH) including random access response (RAR) monitoring for the serving cell. Note that, in the present disclosure, a source cell and a source cell group may be interchangeably interpreted. A candidate cell and a candidate cell group may be interchangeably interpreted.

The source cell transmits a candidate cell configuration to the UE. Then, the source cell transmits a RACH indication (PDCCH order) on the PDCCH (for example, including DCI format 1_0) to the UE. Note that, in the indication, parallel RAR is complicated, and thus one candidate cell is indicated. Then, the UE transmits the PRACH in the RACH procedure to the candidate cell for TAG/TA acquisition.

Next, the source cell transmits a RAR (TA indication) to the UE. In this case, because only one common search space (CSS) is configured, the RAR is monitored in the SpCell (only in a Distributed Unit (DU)). Then, the UE may perform transmission and reception in the current serving cell. Then, in the source cell, TA adjustment is performed.

Next, the source cell transmits the cell switch command to the UE. In this case, TA information can be moved from the source cell to the target cell. In this case, UL synchronization of all the candidate cells may not complete after initial cell switch. The UE performs first UL transmission by using initial TA.

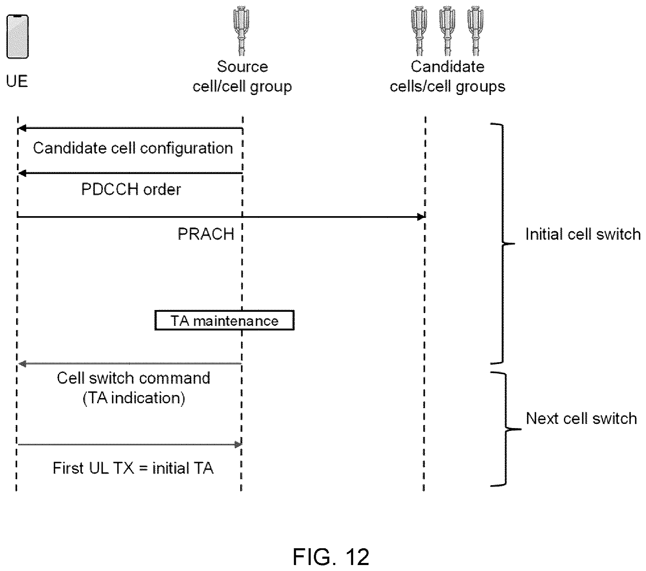

FIG. 12 is a diagram to show a PDCCH indicated RACH (PDCCH ordered RACH) not including random access response (RAR) monitoring for candidate cells. Regarding FIG. 12, only differences from FIG. 11 will be described. In the example of FIG. 12, a plurality of candidate cells may be indicated in a RACH indication (PDCCH order) on the PDCCH. The UE may transmit the PRACH in the RACH procedure to the candidate cells to acquire a plurality of TAGs/TAs. Then, the source cell transmits a TA indication in the cell switch command, without transmitting a RAR.

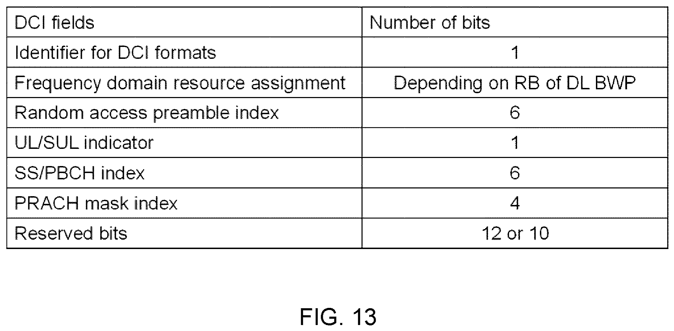

FIG. 13 is a diagram to show DCI format 1_0 CRC-scrambled with a C-RNTI. "Frequency domain resource assignment" may be used for the PDCCH indicated RACH (PDCCH order), for example. "Random access preamble index" may be used for Contention based Random Access (CBRA). "Reserved bits" are 12 bits in a case of operation in a cell with spectrum-sharing channel access, and 10 bits otherwise.

### (PDCCH Order)

An example of UE operation when the network (for example, the base station) transmits the PDCCH order for requesting PRACH transmission will be described.

### <Option 1>

Based on a certain parameter used for the PDCCH for the PDCCH order, the UE may determine a cell associated with the PDCCH order (or the PRACH for performing transmission by the PDCCH order). The certain parameter may be the TCI state, for example.

For example, when the base station may transmit the PDCCH order for the PRACH and the PDCCH (or the DCI/CORESET) is associated with the TCI state from the non-serving cell, the PRACH requested by the PDCCH order may correspond to the non-serving cell. In this case, the UE may control PRACH transmission, based on the PRACH configuration of the non-serving cell. Subsequently, the UE may determine the TA of the non-serving cell, based on DL transmission (for example, the RAR) fed back for the PRACH transmission.

When the PDCCH (or the DCI/CORESET) is associated with the TCI state from the serving cell, the PRACH requested by the PDCCH order may correspond to the serving cell. In this case, the UE may control transmission of the PRACH, based on the PRACH configuration of the serving cell. Subsequently, the UE may determine the TA of the serving cell, based on DL transmission (for example, the RAR) fed back for the PRACH transmission.

### <Option 2>

Based on DCI (or a CORESET) used for the PDCCH order, the UE may determine a cell associated with the PDCCH order (or the PRACH for performing transmission by the PDCCH order).

For example, identification information (for example, a cell index/cell type (for example, the serving cell/the non-serving cell)) of a cell associated with the PRACH may be included in the DCI used for the PDCCH order to be reported to the UE. In order to explicitly indicate the serving cell/non-serving cell associated with the PRACH in a certain DCI format (for example, DCI format 1_0) used for the PDCCH order, X reserved bits of the DCI may be used for reporting of the cell. The reserved bits may be reserved bits included in DCI format 1_0 of existing systems (for example, Rel. 15/16).

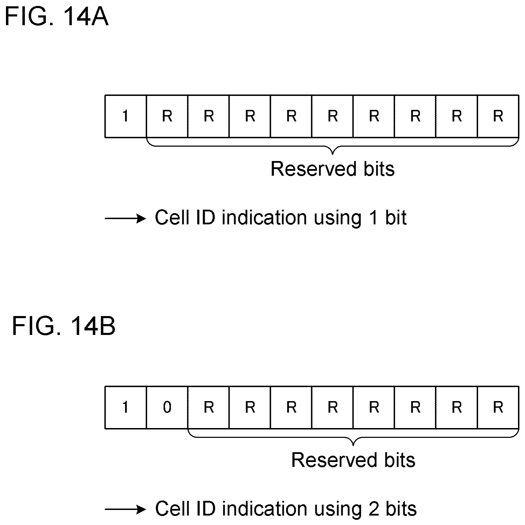

The bit size of X may be configured/determined based on the number of configured non-serving cells. For example, when one non-serving cell is configured, X may be 1 bit (see FIG. 14A). In this case, '0' may indicate the serving cell, and '1' may indicate the non-serving cell. As a field used for reporting of the identification information of the cell, a most significant bit (MSB) or a least significant bit (LSB) of the reserved bits may be applied.

When three non-serving cells are configured, X may be 2 bits (see FIG. 14B). In order to indicate the non-serving cells, re-indexed indexes of the non-serving cells may be applied. Association between the cell indexes and bit values (or code points) may be defined in a specification, or may be configured by higher layer signaling or the like. For example, the code point '0' or '00' may indicate the serving cell, and the rest of the bits may be associated in index order (for example, ascending order/descending order) of the configured non-serving cells.

Alternatively, the size of X may be fixed, and the number of bits may not be changed regardless of the number of configured non-serving cells. In this case, unused bits/field may be configured as reserved bits.

### <Option 3>

When a random access preamble index (for example, ra-PreambleIndex) has a certain value (for example, 0 to 63), a part of preambles may be configured/activated by RRC/MAC CE so as to be related to the non-serving cell.

In this case, information of the serving cell/non-serving cell may be indicated by a certain field in a certain DCI format (for example, DCI format 1_0). The certain field may be a random access preamble index field (for example, a Random Access Preamble index field), for example. Note that preamble configuration related to the non-serving cell may be applied to only PRACH transmission based on the PDCCH order (or may not be applied to contention-based PRACH transmission).

When a preamble related to the non-serving cell is indicated by the DCI, the UE may perform control to perform PRACH transmission having the indicated preamble, in accordance with the RACH configuration of the non-serving cell.

The UE may adjust the indicated TA of one or more cells after the PRACH based on the PDCCH order. Information related to the TA may be received from a response signal (for example, the RAR) for PRACH transmission.

### <UE Capability Information>

The following UE capabilities may be configured. Note that the following UE capabilities may each be interpreted as a parameter (for example, a higher layer parameter) configured for the UE by a network (for example, the base station).

UE capability information related to whether or not to support the PDCCH order for the PRACH of the non-serving cell may be defined. In this case, UE capability information related to the number of non-serving cells supporting the PRACH based on the PDCCH order (for example, the number that can be supported by the UE) may be defined.

UE capability information related to whether or not to support the CORESETE by the PDCCH order (for example, the CORESET related to the TCI state of the non-serving cell) may be defined.

UE capability information related to whether or not to support the SSB of the non-serving cell-based PRACH or the CSI-RS of the non-serving cell-based PRACH may be defined.

UE capability information related to whether or not to support enhancement to a certain DCI format (for example, DCI format 1_0) used for the PDCCH order of the non-serving cell may be defined. In this case, UE capability information related to the number of non-serving cells supporting the PRACH based on the PDCCH order (for example, the number that can be supported by the UE) may be defined.

UE capability information related to whether or not to support association between the non-serving cell and the random access preamble index (for example, ra-PreambleIndex) may be defined. In this case, UE capability information related to the number of non-serving cells associated with the random access preamble index (for example, ra-PreambleIndex) (for example, the number that can be supported by the UE) may be defined.

### (Problem)

As described above, it is assumed that, in future radio communication systems (for example, radio communication systems of later than Rel. 16/5G), communication is controlled based on inter-cell mobility with a plurality of cells including a non-serving cell (for example, a candidate cell) or inter-cell mobility using a plurality of transmission/reception points (for example, a multi-TRP). However, when UL transmission can be performed for a plurality of candidate cells, how to perform control on the UL transmission (for example, control on timing advance and the like) presents a problem. Unless UL transmission for a plurality of candidate cells is appropriately controlled, quality of communication using a plurality of transmission/reception points may degrade.

For example, in the PDCCH order, one cell index can be indicated. However, a case of triggering the RACH for a plurality of cells (candidate cells) is not considered. For example, in the RACH indicated by the PDCCH order, when there are a plurality of candidate cells for TA acquisition (for example, the plurality of cells have the same L1 beam measurement results) and the TAG IDs are different therebetween, for which candidate cell the NW/UE performs TA acquisition has not been clarified.

In view of this, the inventors of the present invention came up with the idea of a radio communication method that enables appropriate control on UL transmission even when the UL transmission can be performed for a plurality of candidate cells.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, another message (for example, a message from a core network, such as a positioning protocol (for example, NR Positioning Protocol A (NRPPa)/LTE Positioning Protocol (LPP)) message), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, a cell group, a serving cell group, a master cell group (MCG), and a secondary cell group (SCG) may be interchangeably interpreted. L1/L2, L1/L2 signaling, and DCI/MAC CE may be interchangeably interpreted. The serving cell may be replaced with a cell that transmits the PDSCH. The candidate cell may mean a candidate cell to become the serving cell in L1/L2 inter-cell mobility.

In the present disclosure, a cell, a PCI, a serving cell, a source serving cell, a source cell, a CC, a BWP, a BWP in a CC, and a band may be interchangeably interpreted. In the present disclosure, a cell, a PCI, a cell having an additional PCI, an additional cell, another cell, a non-serving cell, a cell having a different PCI, a candidate cell, a candidate serving cell, a cell having a PCI different from the PCI of the current serving cell, another serving cell, and a target cell may be interchangeably interpreted. In the present disclosure, switch, change, and update may be interchangeably interpreted. The serving cell may be interpreted as a serving cell before being switched or a serving cell after being switched.

In the present disclosure, a source cell and a source cell group may be interchangeably interpreted. A candidate cell, a candidate cell group, a TA, and a TAG may be interchangeably interpreted. In the present disclosure, a candidate cell index and a TAG ID may be interchangeably interpreted. A TAG and a TAG ID may be interchangeably interpreted. In the present disclosure, the number of candidate cells, the number of candidate cell indices, and the number of PRACH transmissions may be interchangeably interpreted. In the present disclosure, FR1 and FR2 are described as frequency ranges (FRs), but these are not restrictive. FR1/FR2 may be interpreted as FR3/FR4. FR1 and FR2 may be interchangeably interpreted.

### (Radio Communication Method)

### <First Embodiment>

When there are a plurality of TAGs whose TA is to be measured, the PRACH is transmitted to a plurality of TAGs or candidate cells indicated by DCI. In the present disclosure, the UE may receive an indication of one or a plurality of candidate cell indices for PRACH transmission on the PDCCH (DCI), based on the above-described method (PDCCH order), and transmit the PRACH to one or a plurality of candidate cells corresponding to the candidate cell indices, based on the indication. In at least one of the present embodiments, the RACH procedure is initiated by the RACH being indicated by the PDCCH. In the present disclosure, a candidate cell index and a TAG ID may be interchangeably interpreted.

### {Aspect 1-1}

Aspect 1-1 will describe a case in which, as the number of PRACH transmissions, the UE is indicated with "once" by a PDCCH order or a MAC CE or configured with "once" by RRC, or "once" is defined in a specification in advance.

When RAR monitoring is indicated by a PDCCH order or a MAC CE, or configured by RRC, or defined in advance, the UE transmits the PRACH only to one candidate cell.

When RAR monitoring is not indicated by a PDCCH order or a MAC CE, not configured by RRC, or not defined in advance, the UE transmits the PRACH only to one candidate cell.

When the UE performs PRACH transmission in FR1, a plurality of candidate cells may receive the PRACH by means of implementation of the NW. In this case, the candidate cells may have the same RACH occasion (RO) configuration.

### {Aspect 1-2}

Aspect 1-2 will describe a case in which, as the number of PRACH transmissions, the UE is indicated with "more than once" by a PDCCH order or a MAC CE or configured with "more than once" by RRC, or "more than once" is defined in a specification in advance.

When RAR monitoring is indicated by a PDCCH order or a MAC CE, configured by RRC, or defined in advance (the UE receives a RAR), the UE may transmit the PRACH to one candidate cell.

When RAR monitoring is not indicated by a PDCCH order or a MAC CE, not configured by RRC, or not defined in advance (the UE does not receive a RAR), at least one of the following option 1 to option 3 is applied.

### <<Option 1>>

In FR1, the UE transmits the PRACH only to one candidate cell.

### <<Option 2>>

In FR2, the UE transmits the PRACH to one candidate cell, based on specific bits of DCI. PRACH transmission corresponding to one or more other candidate cells or one or more TAGs may be indicated by other bits (for example, new bits indicating one or more additional cells/TAG IDs) of the DCI.

### <<Option 2-1>>

For the above-described other bits, reserved bits (R bits) may be used. Consequently, the total number of bits of the DCI format is not changed. For example, when N candidate cells or TAGs are configured by RRC, log₂ N reserved bits are used for the indices of other candidate cells or TAGs. When the UE transmits the PRACH only to one candidate cell, the above-described other bits may be configured with all 0.

### <<Option 2-2>>

For the above-described other bits, a new field may be added to DCI.

### <<Option 3>>

In FR2, the candidate cell index or the TAG ID for a plurality of PRACH transmissions may be indicated/configured by higher layer signaling/physical layer signaling. A field for configuration/indication of a cell may be enhanced.

Options 1 to 3 may be compatibly used between FR1 and FR2, or may be used in common.

In the present embodiment, PRACH transmission for other candidate cells or TAGs may be triggered by a MAC CE or RRC.

The present embodiment may be applied only when RAR monitoring is indicated by a PDCCH order or a MAC CE, configured by RRC, or defined in a specification in advance. When a RAR is configured, the PRACH may be transmitted only to one candidate cell.

The present embodiment may be applied only to contention free random access (CFRA), only to contention based random access (CBRA), or to both of CFRA and CBRA. Which is to be applied may be defined in a specification, may be configured/indicated by higher layer signaling/physical layer signaling, or may be reported as UE capability information.

### {Specific Example 1}

A specific example regarding correspondence between the DCI field and the candidate cell indices in options 2-1 and 2-2 will be described. The number of bits of DCI may be changed according to the number of candidate cells/TAGs configured/indicated by RRC/MAC CE. In the present disclosure, a candidate cell index and a TAG ID may be interchangeably interpreted. The DCI in each specific example may be DCI included in the PDCCH (PDCCH order) for indicating the PRACH.

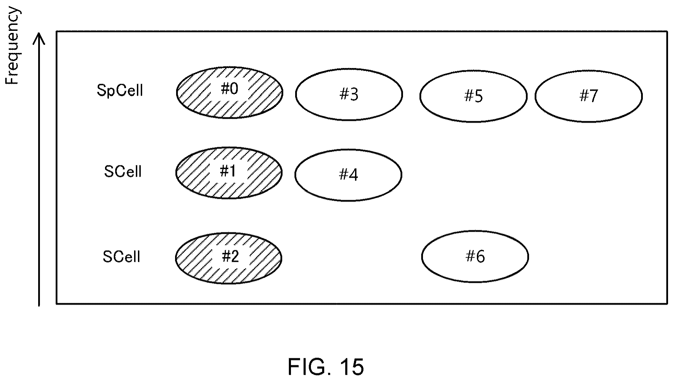

FIG. 15 is a diagram to show an example of a cell configuration according to a first embodiment. #0 to #7 of FIG. 15 indicate candidate cell indices. Each candidate cell is defined in one MAC entity. #0, #1, and #2 indicate serving cells. The cell of #0 is an SpCell, and the cells of #1 and #2 are SCells. #3 to #6 indicate candidate cells.

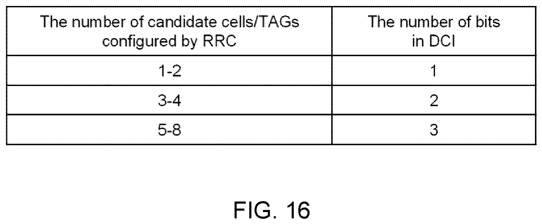

FIG. 16 is a diagram to show a relationship between the number of candidate cells/TAGs configured by RRC and the number of DCI bits. As shown in FIG. 16, different numbers of DCI bits are used according to the number of candidate cells/TAGs configured by RRC.

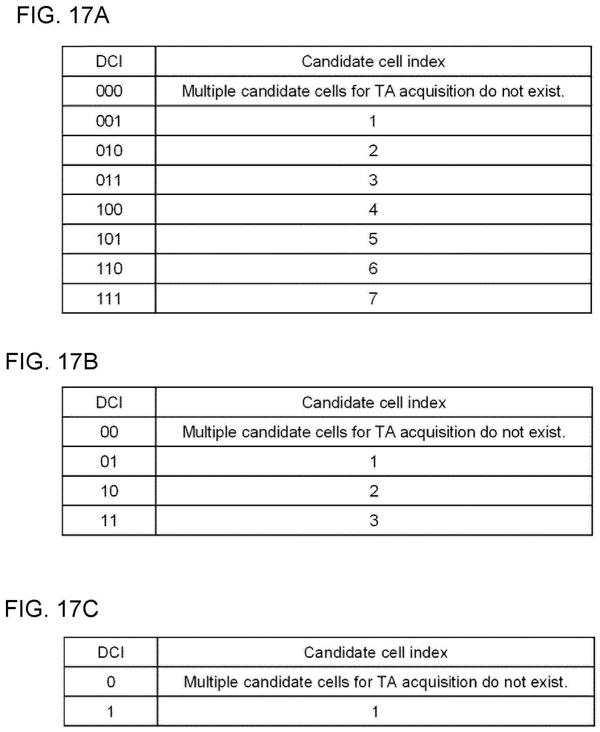

FIG. 17A is a diagram to show an example of assignment of the candidate cell indices to the DCI field when the number of candidate cells/TAGs is 8. In the example shown in FIG. 17A, the number of DCI bits is 3. When the DCI field is "000", it may indicate that a plurality of candidate cells for TA acquisition do not exist (one candidate cell exists).

FIG. 17B is a diagram to show an example of assignment of the candidate cell indices to the DCI field when the number of candidate cells/TAGs is 4. In the example shown in FIG. 17B, the number of DCI bits is 2. When the DCI field is "00", it may indicate that a plurality of candidate cells for TA acquisition do not exist (one candidate cell exists).

FIG. 17C is a diagram to show an example of assignment of the candidate cell indices to the DCI field when the number of candidate cells/TAGs is 2. In the example shown in FIG. 17C, the number of DCI bits is 1. When the DCI field is "0", it may indicate that a plurality of candidate cells for TA acquisition do not exist (one candidate cell exists).

According to specific example 1, the UE can acquire an indication of all the candidate cell indices/TAG IDs by DCI.

### {Specific Example 2}

Another example regarding correspondence between the DCI field and the candidate cell indices in options 2-1 and 2-2 will be described. When N candidate cells or TAGs are configured by RRC, and the number of bits of DCI is less than log₂ N, one of the following example 1 to example 3 may be applied.

### <<Example 1>>

The candidate cell indices or the TAG IDs are assigned to the DCI field in ascending order or descending order of the indices.

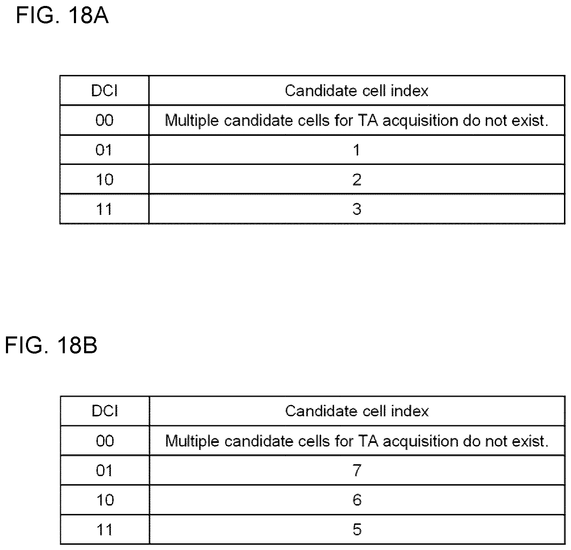

FIG. 18A is a diagram to show an example in which the candidate cell indices are assigned to the DCI field in ascending order of the indices. In FIG. 18A, the candidate cell indices are assigned to the DCI field in order of 1, 2, and 3.

FIG. 18B is a diagram to show an example in which the candidate cell indices are assigned to the DCI field in descending order of the indices. In FIG. 18B, the candidate cell indices are assigned to the DCI field in order of 7, 6, and 5.

### <<Example 2>>

The UE receives parameters corresponding to the candidate cell indices or the TAG IDs by higher layer signaling (for example, a MAC CE or RRC), and the parameters are assigned to the DCI field.

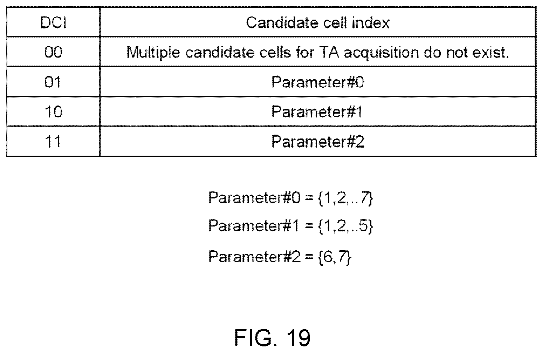

FIG. 19 is a diagram to show an example of the DCI field when parameters corresponding to the candidate cell indices or the TAG IDs are configured/indicated by higher layer signaling. In the example of FIG. 19, one of Parameters #0 to 3 is assigned to the DCI field. For example, one of candidate cell indices {1, 2, ..., 7} is assigned to Parameter #0, one of candidate cell indices {1, 2, ..., 5} is assigned to Parameter #1, and one of candidate cell indices {6, 7} is assigned to Parameter #2 by higher layer signaling in advance.

### <<Example 3>>

One or a plurality of candidate cell indices or TAG IDs or parameters corresponding thereto are defined in a specification in advance, or indicated/configured by higher layer signaling (for example, RRC or a MAC CE). Then, the one or plurality of candidate cell indices or TAG IDs or the parameters corresponding thereto are indicated in DCI.

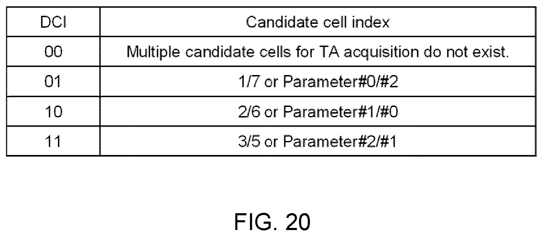

FIG. 20 is a diagram to show an example in which a plurality of candidate cell indices are indicated by DCI. In FIG. 20, candidate cell indices 1 and 7 are assigned to the DCI bit "01", candidate cell indices 2 and 6 are assigned to the DCI bit "10", and candidate cell indices 3 and 5 are assigned to the DCI bit "11". In other words, although the examples of FIG. 18A and FIG. 18B are combined in the candidate cell indices of FIG. 20, the combination is not limited to this example.

Alternatively, in combination with the example of FIG. 19, Parameters #0 and #2 may be assigned to the DCI bit "01", Parameters #1 and #0 may be assigned to the DCI bit "10", and Parameters #2 and #1 may be assigned to the DCI bit "11". Similarly to the example of FIG. 19, Parameters #0 to #2 are indicated/configured with the candidate cell indices by higher layer signaling in advance.

Note that, similarly to FIG. 17A to FIG. 17C, the DCI field "00" of FIG. 18 to FIG. 20 may indicate that a plurality of candidate cells for TA acquisition do not exist (one candidate cell exists).

In FIG. 20, although two candidate cell indices are assigned to one DCI field, two candidate cell indices may be assigned to one DCI field.

According to specific example 2, the UE can acquire an indication of necessary candidate cell indices/TAG IDs by DCI even when there is a small number of bits of DCI. Consequently, the number of bits of DCI can be reduced.

### {Specific Example 3}

As specific examples of option 3 of aspect 1-2, examples of the following options 3-1 and 3-2 will be described.

### <<Option 3-1>>

When N candidate cells or TAGs are configured by RRC, and the number of bits of DCI is log₂ N, one candidate cell index may be defined in advance, or other candidate cell indices may be indicated or configured by higher layer signaling (for example, RRC or a MAC CE).

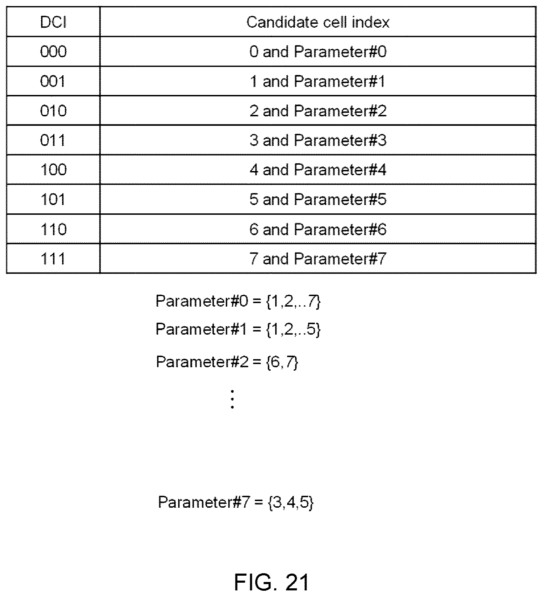

FIG. 21 is a diagram to show an example of option 3-1. In FIG. 21, in one DCI field, one of candidate cell indices #0 to #7 and one of Parameters #0 to #7 are indicated. Parameters #0 to #7 are assigned other candidate cell indices by higher layer signaling in advance.

### <<Option 3-2>>

For each DCI code point, one or a plurality of candidate cell indices are configured by higher layer signaling (for example, RRC or a MAC CE) in advance, and parameters corresponding to the configurations of the higher layer signaling are indicated in one DCI field. The DCI bit size is determined by a list configured by the higher layer signaling.

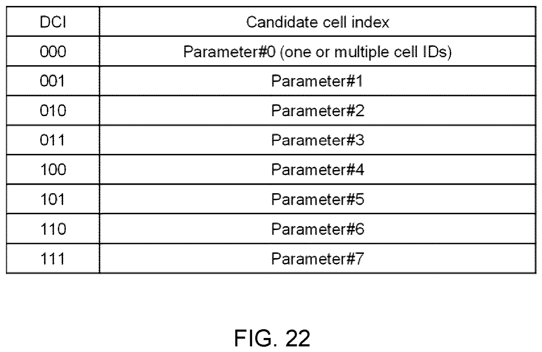

FIG. 22 is a diagram to show an example of option 3-2. In FIG. 22, in one DCI field, one of Parameters #0 to #7 is indicated. Parameters #0 to #7 are assigned one or a plurality of candidate cell indices by higher layer signaling.

According to specific example 3, the UE can acquire an indication of a plurality of candidate cell indices/TAG IDs by one DCI field. Consequently, increase in the number of bits of DCI can be reduced even when there is a great number of candidate cells for transmitting the PRACH.

### {Aspect 1-3}

The number of PRACH transmissions may be indicated by the PDCCH. When the number of bits of DCI and the number of PRACH transmissions correspond to each other, and the number of PRACH transmissions is M, a DCI field of log₂ M bits may be used. The number of bits of DCI may be changed according to the number of PRACH transmissions configured/indicated by RRC/MAC CE. The number of PRACH transmissions may be the same as the number of candidate cells. In other words, the UE may transmit one PRACH to one candidate cell. The UE may determine the number of candidate cells, based on the number of indicated PRACH transmissions.

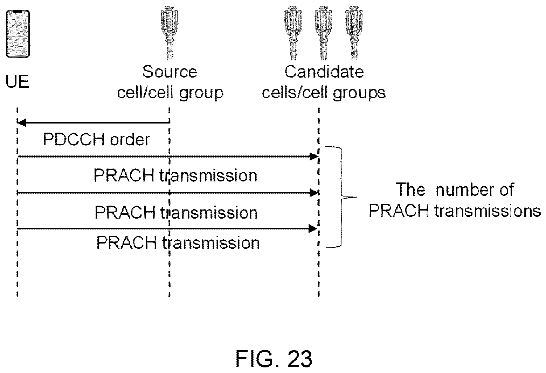

FIG. 23 is a diagram to show an example of processing of aspect 1-3. The source cell/cell group transmits a PRACH indication on the PDCCH to the UE. Then, the UE transmits the PRACH to candidate cells/cell groups in response to the indication.

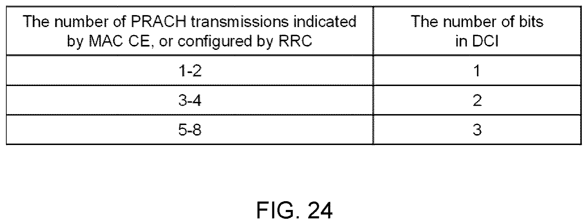

FIG. 24 is a diagram to show a relationship between the number of PRACH transmissions configured by RRC and the number of DCI bits. As shown in FIG. 24, different numbers of DCI bits are used according to the number of PRACH transmissions configured by RRC.

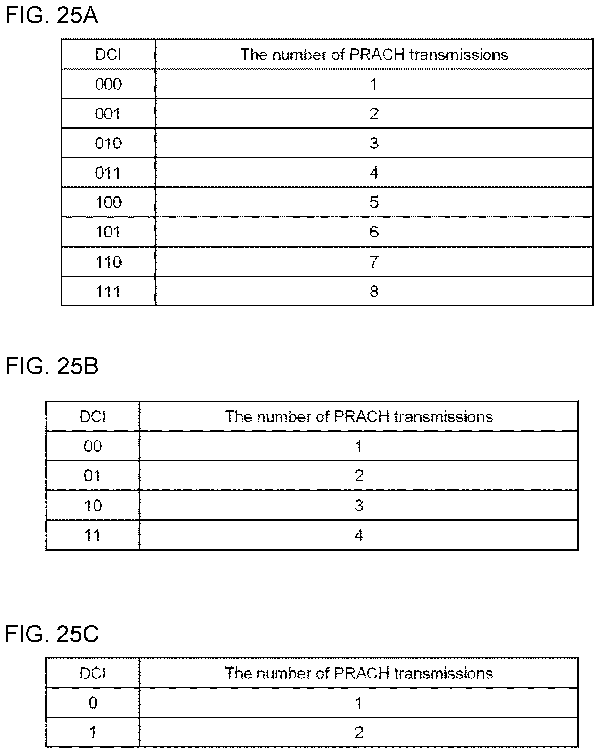

FIG. 25A is a diagram to show an example of assignment of the number of PRACH transmissions to the DCI field when the maximum number of PRACH transmissions is 8. In the example shown in FIG. 25A, the number of DCI bits is 3.

FIG. 25B is a diagram to show an example of assignment of the number of PRACH transmissions to the DCI field when the maximum number of PRACH transmissions is 4. In the example shown in FIG. 25B, the number of DCI bits is 2.

FIG. 25C is a diagram to show an example of assignment of the number of PRACH transmissions to the DCI field when the maximum number of PRACH transmissions is 2. In the example shown in FIG. 25C, the number of DCI bits is 1.

According to the examples of FIG. 24 and FIG. 25, the UE can acquire an indication of the number of PRACH transmissions in all the cases by DCI.

### <<Variations>>

Variations of the number of PRACH transmissions will be described. When the UE is configured/indicated with M PRACH transmissions by higher layer signaling (for example, RRC or a MAC CE), and the number of bits of DCI is less than log₂ M bits, the following option 1 or 2 may be applied.

### <<Option 1>>

The number of PRACH transmissions is assigned to the DCI field in ascending order or descending order.

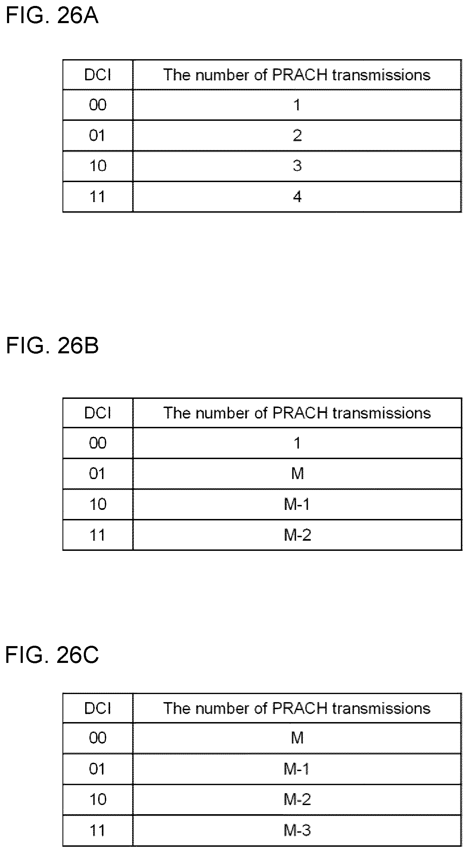

FIG. 26A is a diagram to show an example in which the number of PRACH transmissions is assigned to the DCI field in ascending order. In FIG. 26A, the number of PRACH transmissions is assigned to the DCI field in order of 1, 2, 3, and 4.

FIG. 26B is a diagram to show a first example in which the number of PRACH transmissions is assigned to the DCI field in descending order. In FIG. 26B, the number of PRACH transmissions is assigned to the DCI field in order of 1, M, M-1, and M-2. In other words, "once" is assigned to the DCI bit "00", and the number of PRACH transmissions is assigned to other DCI bits in descending order.

FIG. 26C is a diagram to show a second example in which the number of PRACH transmissions is assigned to the DCI field in descending order. In FIG. 26C, the number of PRACH transmissions is assigned to the DCI field in order of M, M-1, M-2, and M-3.

### <<Option 2>>

The number of PRACH transmissions is configured/indicated by higher layer signaling (RRC or a MAC CE), and parameters corresponding to the number of PRACH transmissions are associated with the DCI field.

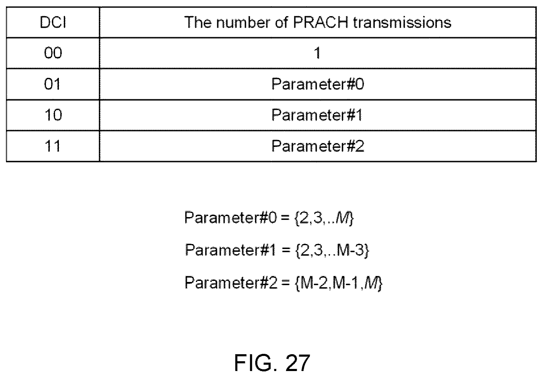

FIG. 27 is a diagram to show an example of the DCI field when the number of PRACH transmissions is configured/indicated by higher layer signaling. In the example of FIG. 27, 1 and Parameters #0 to 2 are assigned to respective DCI fields. In the example of FIG. 27, for example, one of candidate cell indices {2, 3, ..., M} is assigned to Parameter #0, one of candidate cell indices {2, 3, ..., M-3} is assigned to Parameter #1, and one of {candidate cell indices {M-2, M-1, M} is assigned to Parameter #2 by higher layer signaling in advance. Note that the parameters configured/indicated by higher layer signaling may also be assigned to the DCI bit "00".

According to the examples of FIG. 26 and FIG. 27, the UE can acquire an indication of the number of PRACH transmissions by DCI even when there is a small number of bits of DCI. Consequently, the number of bits of DCI can be reduced.

### {Supplements}

The candidate cell indices or the TAG IDs may be indicated by a MAC CE, or may be configured by RRC. The maximum value of the candidate cell indices or the TAG IDs may be X. The UE may receive a configuration/indication of X by higher layer signaling/physical layer signaling, or it may be transmitted as UE capability information.

When the candidate cell index or the TAG ID is 0, the candidate cell index or the TAG ID may correspond to an SpCell. The candidate cell indices or the TAG IDs other than 0 may be assigned in ascending order or descending order of frequency.

In the present disclosure, the candidate cell index may be interpreted as the TAG ID. For example, when 8 (= X+1) candidate cells are indicated or configured, the candidate cell indices are {0, 1, ..., 7}.

### <Second Embodiment>

When there are a plurality of TAGs whose TA is to be measured, a RACH-less method for a plurality of TAGs or candidate cells indicated by DCI is triggered. The RACH-less method means that the random access procedure is not used, and the details thereof will be described later. In the present embodiment, based on the above-described method (PDCCH order), the UE may receive an indication of one candidate cell index or timing advance group (TAG) ID for PRACH transmission, and transmit the PRACH to the one candidate cell. "Other candidate cells or TAGs" hereinafter mean candidate cells or TAGs having indices/IDs other than those of the one candidate cell index or timing advance group (TAG) ID. The DCI of the present embodiment may be included in the above-described PDCCH order.

### {Aspect 2-1}

### <<Option 1>>

The UE transmits the PRACH only to one candidate cell, and the RACH-less method is not triggered for other candidate cells or TAGs.

### <<Option 2>>

The UE transmits the PRACH to one candidate cell, and the RACH-less method for other candidate cells or TAGs is triggered. In this case, at least one of the following options 2-1 to 2-3 is applied.

### <<Option 2-1>>

The RACH-less method for one candidate cell or TAG is triggered. Other candidate cells or TAGs are indicated according to a method of one of the following options 2-1-1 to 2-1-3.

### <<Option 2-1-1>>

Other candidate cells or TAGs are indicated by bits other than the one candidate cell or TAG ID bit in DCI. When N candidate cells or TAGs are configured by RRC, log₂ N reserved bits (R bits) are used for the indices of other candidate cells or TAGs. When the RACH-less method is not triggered, the log₂ N reserved bits are configured with all 0. Consequently, the total number of bits of the DCI format is not changed.

### <<Option 2-1-2>>

For other candidate cells or TAGs, a field other than that of option 2-1-1 is added. The total number of bits of the DCI format increases.

### <<Option 2-1-3>>

DCI indicates other candidate cells or TAGs, according to the method of option 3 of the first embodiment.

### <<Option 2-2>>

The UE receives a configuration of other candidate cells or TAGs by RRC. The RACH-less method for a plurality of candidate cells or TAGs of the candidate cells or TAGs configured in RRC may be triggered by DCI/MAC CE (the trigger may be received by DCI/MAC CE).

### <<Option 2-3>>

The UE receives a configuration of other candidate cells or TAGs by RRC. The RACH-less method for all the candidate cells or TAGs configured by RRC may be triggered. In this case, the following option 2-3-1 or option 2-3-2 may be applied.

### <<Option 2-3-1>>

The UE receives DCI/MAC CE including a flag for triggering the RACH-less method. For the flag, reserved bits (R) may be used. In the flag, for example, 0 may mean no trigger, and 1 may mean trigger.

### <<Option 2-3-2>>

The UE receives DCI/MAC CE including a new field indicating a flag for triggering the RACH-less method. In this case, the total number of bits of the DCI/MAC CE increases. In the flag, for example, 0 may mean no trigger, and 1 may mean trigger.

In the present embodiment, the RACH-less method for candidate cells or TAGs other than the candidate cells indicated by the PDCCH order may be triggered by a MAC CE or RRC.

The processing of the present embodiment may be applied only to CFRA, only to CBRA, or to both of CFRA and CBRA. Which of CFRA or CBRA is to be applied may be defined in a specification, or may be configured/indicated for the UE by higher layer signaling/physical layer signaling. Which of CFRA or CBRA is to be applied may be transmitted as UE capability information.

The cell configuration of the present embodiment may be similar to the cell configuration of FIG. 15, for example. One of the examples of FIG. 16 to FIG. 20 may be applied to assignment of the candidate cell indices to the DCI field.

### {RACH-Less Method}

The RACH-less method is a mechanism in which a trigger for the random access procedure by the NW or the UE is not performed for TA acquisition. On the other hand, a RACH-based method (for example, a RACH indicated by the PDCCH, a RACH triggered by the UE) is a mechanism in which the random access procedure is performed with a trigger by the NW or the UE for TA acquisition. The RACH-less method may be configured/indicated for the UE by RRC or a MAC CE, or may be configured by the UE.

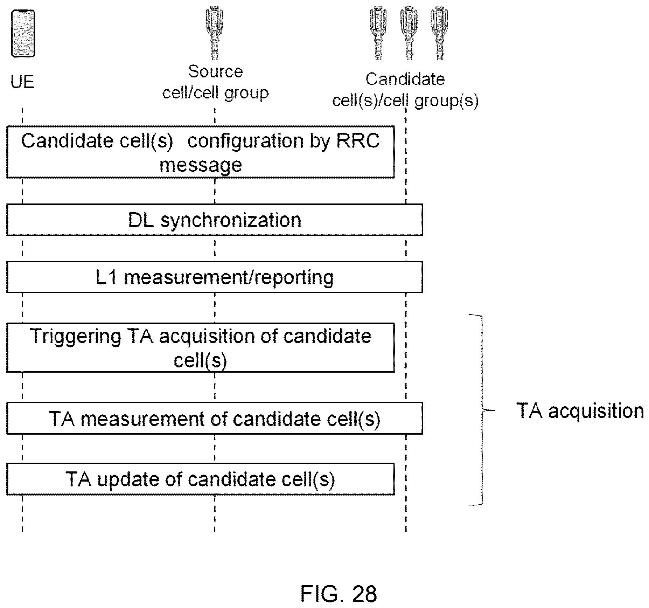

FIG. 28 is a diagram to show a procedure of the RACH-less method. First, the UE receives a candidate cell configuration from the source cell/cell group, using an RRC message. Next, DL synchronization is performed among the UE, the source cell/cell group, and the candidate cells/cell groups. Next, the UE performs L1 measurement, and performs transmission to the source cell/cell group and the candidate cells/cell groups.

Next, the UE or the source cell/cell group performs a trigger for TA acquisition of the candidate cells. The UE performs TA measurement of the candidate cells, and performs reporting to at least one of the source cell/cell group and the candidate cells/cell groups. Next, TA update of the candidate cells is performed, and the UE is notified from the source cell/cell group.

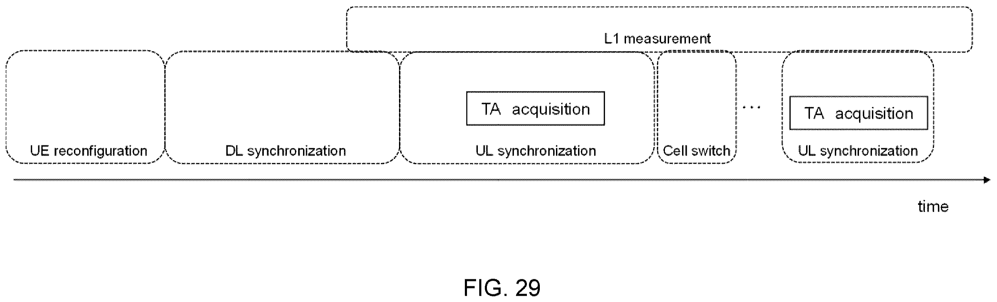

FIG. 29 is a diagram to show an overview of the RACH-less method. As shown in FIG. 29, UE reconfiguration, DL synchronization, UL synchronization, cell switch, and UL synchronization are performed in this order. In the UL synchronization, TA acquisition is performed.

According to the present embodiment, the candidate cell indices/TAGs can be appropriately indicated even when the RACH-less method is used.

### <Third Embodiment>

In the first embodiment, the NW can indicate the number of PRACH transmissions/number of candidate cells to the UE. The present embodiment will describe how the UE determines resources/occasions of each PRACH when a plurality of PRACH transmissions are indicated/configured.

The PRACH resources/occasions for the serving cell may be as described in existing specifications. Other PRACH resources/occasions (for candidate cells) may be indicated/configured for the UE by higher layer signaling, may be determined according to a certain rule based on the PRACH resources/occasions for the serving cell, or may be derived by the UE based on an offset indicated/configured by higher layer signaling.

Other PRACH resources/occasions (for candidate cells) may be indicated to the UE by DCI, according to a method similar to that of aspect 1-3. For example, when the candidate cells include different RACH occasion configurations, the UE may receive an indication of one or a plurality of RACH occasions by DCI. When one preamble index can actually function, the UE may receive one or a plurality of preamble indices by DCI. If necessary in FR2, one or a plurality of SSB indices may be received.

Note that the order or the association between the fields and the cell IDs in DCI may be defined in a specification in advance, or may be configured by higher layer signaling, such that the UE can correctly understand the indicated PRACH resources of each cell. Regarding a specific indication, when DCI including one indication field is defined in advance, the indication may be applied to all the indicated cell IDs. For example, when there is only one preamble index indication field, it may mean that the preamble index is used for the PRACH of each indicated cell.

The processing of the present embodiment may be applied only to CFRA, only to CBRA, or to both of CFRA and CBRA. Which of CFRA or CBRA is to be applied may be defined in a specification, or may be configured/indicated for the UE by higher layer signaling/physical layer signaling. Which of CFRA or CBRA is to be applied may be transmitted as UE capability information.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- Supporting of specific processing/operation/control/information regarding at least one of the embodiments described above.
- Maximum number of candidate cell indices or TAG IDs.
- Supporting of the RACH-less method.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19) or the like.

When the UE does not support at least one of the specific UE capabilities above or is not configured with the specific information, operation of Rel. 15/16 may be applied, for example.

### (Supplementary Notes)

Regarding one embodiment of the present disclosure, the following supplementary notes of the invention will be given.

### {Supplementary Note 1}

A terminal including:
a receiving section that receives an indication of one or a plurality of candidate cell indices or timing advance group (TAG) IDs for physical random access channel (PRACH) transmission on a physical link downlink control channel (PDCCH); and
a control section that controls the PRACH transmission to candidate cell(s) corresponding to the candidate cell index(ices) or the TAG ID(s), based on the indication.

### {Supplementary Note 2}

The terminal according to supplementary note 1, wherein
a specific field in downlink control information (DCI) on the PDCCH indicates a plurality of the candidate cell indices or a plurality of the TAG IDs.

### {Supplementary Note 3}

The terminal according to supplementary note 1 or 2, wherein
the receiving section receives parameter(s) corresponding to the candidate cell index(ices) or the TAG ID(s) by higher layer signaling, and
a specific field in downlink control information (DCI) on the PDCCH indicates the parameter(s).

### {Supplementary Note 4}

The terminal according to any one of supplementary notes 1 to 3, wherein
a specific field in downlink control information (DCI) on the PDCCH indicates the number of the PRACH transmissions.

### (Supplementary Notes)

Regarding one embodiment of the present disclosure, the following supplementary notes of the invention will be given.

### {Supplementary Note 1}

A terminal comprising:
a receiving section that receives an indication of one candidate cell index or timing advance group (TAG) ID for physical random access channel (PRACH) transmission on a physical link downlink control channel (PDCCH), and receives a trigger for a method not using a random access procedure for one or a plurality of other candidate cells or TAGs; and
a control section that controls the PRACH transmission to a candidate cell corresponding to the candidate cell index or the TAG ID, based on the indication.

### {Supplementary Note 2}

The terminal according to supplementary note 1, wherein
in downlink control information (DCI) on the PDCCH, the another candidate cell or TAG is indicated in a bit other than the bit of the one candidate cell index or TAG ID.

### {Supplementary Note 3}

The terminal according to supplementary note 1 or 2, wherein
the receiving section receives a configuration of the one or plurality of other candidate cells or TAGs by Radio Resource Control (RRC), and receives the trigger for the method not using the random access procedure for a plurality of candidate cells or TAGs out of the candidate cells or the TAGs configured in the RRC by downlink control information (DCI) or a Medium Access Control Control Element (MAC CE).

### {Supplementary Note 4}

The terminal according to any one of supplementary notes 1 to 3, wherein
the receiving section receives a configuration of the one or plurality of other candidate cells or TAGs by Radio Resource Control (RRC), and the method not using the random access procedure for all the candidate cells or the TAGs configured by the RRC is triggered.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

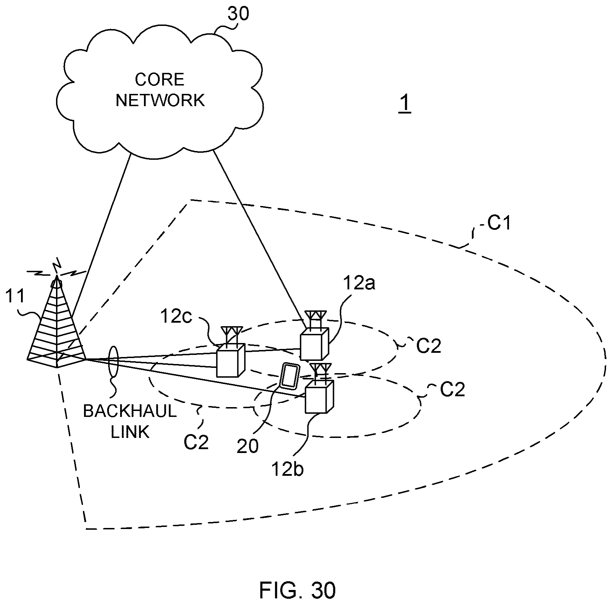

FIG. 30 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

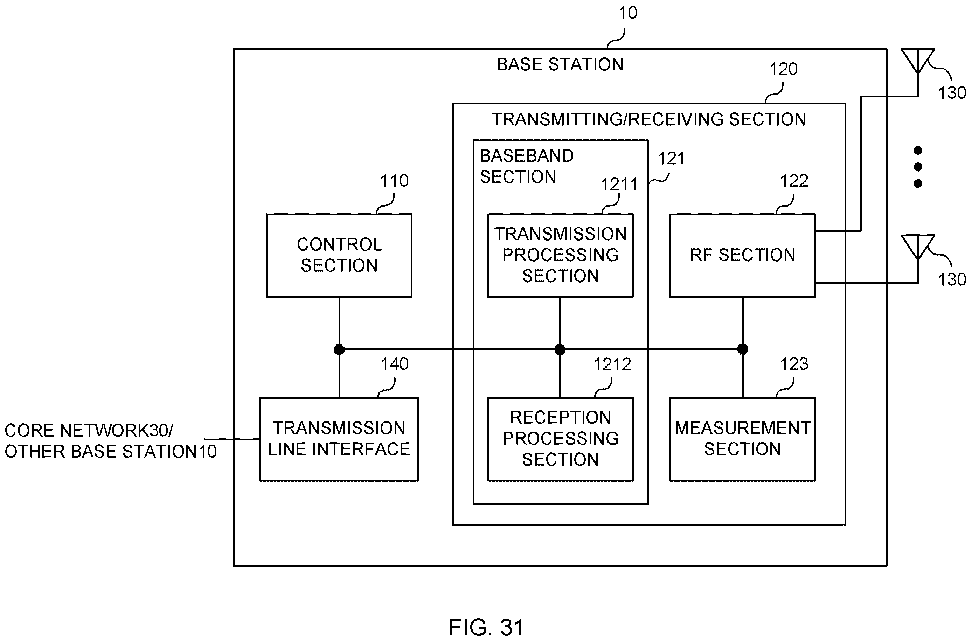

FIG. 31 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit an indication of one or a plurality of candidate cell indices or timing advance group (TAG) IDs for physical random access channel (PRACH) transmission on a physical link downlink control channel (PDCCH) .

The control section 110 may control reception of a PRACH for candidate cell(s) corresponding to the candidate cell index(ices) or the TAG ID(s) transmitted based on the indication.

The transmitting/receiving section 120 may transmit an indication of one candidate cell index or timing advance group (TAG) ID for physical random access channel (PRACH) transmission on a physical link downlink control channel (PDCCH), and transmit a trigger for a method not using a random access procedure for one or a plurality of other candidate cells or TAGs.

The control section 110 may control reception of a PRACH for candidate cell(s) corresponding to the candidate cell index(ices) or the TAG ID(s) transmitted based on the indication.

### (User Terminal)

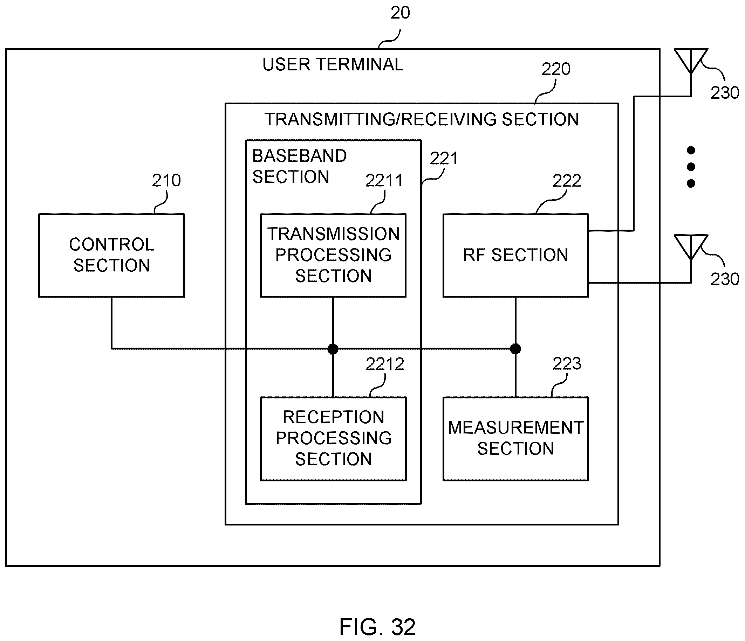

FIG. 32 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on resources for channel measurement. The resources for channel measurement may be non zero power (NZP) CSI-RS resources, for example. The measurement section 223 may derive interference measurement for CSI calculation, based on resources for interference measurement. The resources for interference measurement may be at least one of NZP CSI-RS resources for interference measurement, CSI-interference measurement (IM) resources, and the like. Note that CSI-IM may be referred to as CSI-interference management (IM), or may be interchangeably interpreted as a zero power (ZP) CSI-RS. Note that, in the present disclosure, a CSI-RS, an NZP CSI-RS, a ZP CSI-RS, CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive an indication of one or a plurality of candidate cell indices or timing advance group (TAG) IDs for physical random access channel (PRACH) transmission on a physical link downlink control channel (PDCCH) .

The control section 210 may control the PRACH transmission to candidate cell(s) corresponding to the candidate cell index(ices) or the TAG ID(s), based on the indication.

A specific field in downlink control information (DCI) on the PDCCH may indicate a plurality of the candidate cell indices or a plurality of the TAG IDs.

The transmitting/receiving section 220 may receive parameter(s) corresponding to the candidate cell index(ices) or the TAG ID(s) by higher layer signaling. A specific field in downlink control information (DCI) on the PDCCH may indicate the parameter(s).

A specific field in downlink control information (DCI) on the PDCCH may indicate the number of the PRACH transmissions.

The transmitting/receiving section 220 may receive an indication of one candidate cell index or timing advance group (TAG) ID for physical random access channel (PRACH) transmission on a physical link downlink control channel (PDCCH), and receive a trigger for a method not using a random access procedure for one or a plurality of other candidate cells or TAGs.

The control section 210 may control the PRACH transmission to candidate cell(s) corresponding to the candidate cell index(ices) or the TAG ID(s), based on the indication.

In downlink control information (DCI) on the PDCCH, the another candidate cell or TAG may be indicated in a bit other than the bit of the one candidate cell index or TAG ID.

The transmitting/receiving section 220 may receive a configuration of the one or plurality of other candidate cells or TAGs by Radio Resource Control (RRC), and receive the trigger for the method not using the random access procedure for a plurality of candidate cells or TAGs out of the candidate cells or the TAGs configured in the RRC by downlink control information (DCI) or a Medium Access Control Control Element (MAC CE).

The transmitting/receiving section 220 may receive a configuration of the one or plurality of other candidate cells or TAGs by Radio Resource Control (RRC), and the method not using the random access procedure for all the candidate cells or the TAGs configured by the RRC may be triggered.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

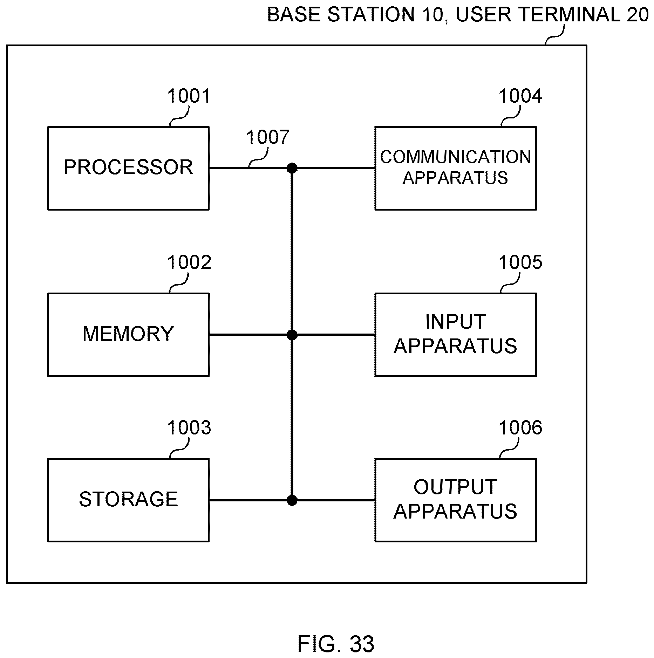

For example, a base station, a user terminal, and so on according to one embodiment of the present disclosure may function as a computer that executes the processes of the radio communication method of the present disclosure. FIG. 33 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

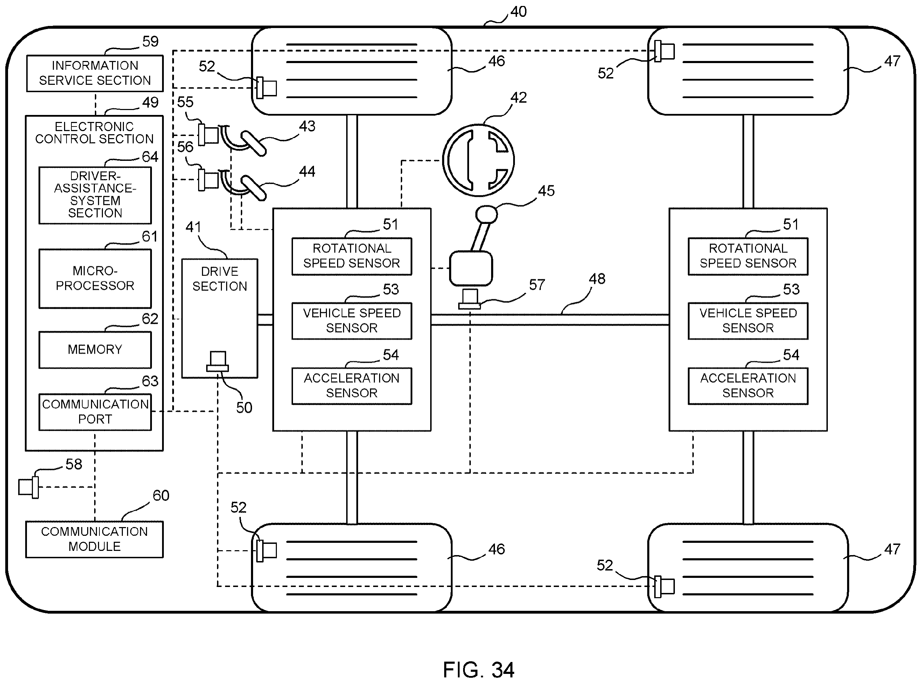

FIG. 34 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives an indication of one or a plurality of candidate cell indices or timing advance group (TAG) IDs for physical random access channel (PRACH) transmission on a physical link downlink control channel (PDCCH); and
a control section that controls the PRACH transmission to candidate cell(s) corresponding to the candidate cell index(ices) or the TAG ID(s), based on the indication.

2. The terminal according to claim 1, wherein
a specific field in downlink control information (DCI) on the PDCCH indicates a plurality of the candidate cell indices or a plurality of the TAG IDs.

3. The terminal according to claim 1, wherein
the receiving section receives parameter(s) corresponding to the candidate cell index(ices) or the TAG ID(s) by higher layer signaling, and
a specific field in downlink control information (DCI) on the PDCCH indicates the parameter(s).

4. The terminal according to claim 1, wherein
a specific field in downlink control information (DCI) on the PDCCH indicates the number of the PRACH transmissions.

5. A radio communication method for a terminal, the radio communication method comprising:
receiving an indication of one or a plurality of candidate cell indices or timing advance group (TAG) IDs for physical random access channel (PRACH) transmission on a physical link downlink control channel (PDCCH); and
controlling the PRACH transmission to candidate cell(s) corresponding to the candidate cell index(ices) or the TAG ID(s), based on the indication.

6. A base station comprising:
a transmitting section that transmits an indication of one or a plurality of candidate cell indices or timing advance group (TAG) IDs for physical random access channel (PRACH) transmission on a physical link downlink control channel (PDCCH); and
a control section that controls reception of a PRACH for candidate cell(s) corresponding to the candidate cell index(ices) or the TAG ID(s) transmitted based on the indication.
